# EUROPEAN PATENT SPECIFICATION

(11) **EP 4 482 731 B1**
(45) Date of publication and mention of the grant of the patent: **10.12.2025**
(21) Application number: 23706869.7
(22) Date of filing: 15.02.2023
(51) Int. Cl.: B62K 5/02, B62K 25/28, B62M 6/60, B62K 19/08, B62K 19/20, B62M 6/85, B62K 19/16, B62K 19/22

(54) **A PEDAL-ASSISTED VEHICLE OF THE RIDE-ON TYPE, WITH TWO REAR WHEELS HAVING INDEPENDENT ELECTRIC MOTORS**
PEDALUNTERSTÜTZTES FAHRZEUG MIT ZWEI HINTERRÄDERN MIT UNABHÄNGIGEN ELEKTROMOTOREN
VÉHICULE À PÉDALAGE ASSISTÉ DE TYPE À ENFOURCHER À DEUX ROUES ARRIÈRE AYANT DES MOTEURS ÉLECTRIQUES INDÉPENDANTS

(30) Priority: 21.02.2022 IT 202200003179; 21.02.2022 IT 202200003182
(43) Date of publication of application: 01.01.2025
(73) Proprietor: Interactive Fully Electrical Vehicles S.r.l., 10040 La Loggia (Torino) (IT)
(72) Inventor: PERLO, Pietro, 10040 La Loggia (Torino) (IT); PENSERINI, Davide, 10040 La Loggia (Torino) (IT); RINAUDO, Ivo, 10040 La Loggia (Torino) (IT); USIGNOLO, Alessandro, 10040 La Loggia (Torino) (IT); DALMASSO, Marco, 10040 La Loggia (Torino) (IT)
(74) Representative: Buzzi, Notaro & Antonielli d'Oulx S.p.A.
(86) International application number: PCT/IB2023/051367
(87) International publication number: WO 2023/156912

(56) References cited:
- WO-A1-2007/117149
- WO-A1-2020/125857
- DE-A1- 102005 039 122
- DE-U1- 202019 001 921
- JP-A- 2011 235 679

## Description

### Field of the invention

The present invention relates to the field of ride-on vehicles, of the general type comprising a frame, carrying a saddle, a front wheel assembly, carried by a steering assembly associated with the frame and including a single front wheel or two front wheels side-by- side, two rear wheels placed side-by-side and carried by the frame, and a pedal crank assembly rotatably mounted on the frame and connected by means of a transmission to at least one of the two rear wheels.

### Prior art

Vehicles of the type indicated above are illustrated in documents WO 2018/138594 A1 and WO 2020/026082 A1 by the same Applicant. Vehicles having the characteristics of the preamble of claim 1 are known from documents WO 2007/117149 A1 and DE 10 2005 039122 A1. WO 2007/117149 A1 discloses all of the features of the preamble of claims 1 and 2.

### Object of the invention

The object of the present invention is to create a ride-on vehicle of the type indicated above which is drastically superior to vehicles of the same type made up to now both in terms of operational efficiency, and in terms of ergonomics and safety for the user.

A further object of the invention is to provide a vehicle of the type indicated above which is capable of assisting the user in pedaling with high power, but at the same time with extended operating autonomy.

A further object of the invention is to achieve the aforesaid objectives with a vehicle having a simple structure and economical construction and wherein, in particular, the electric assistance is obtained with compact and easy-to-install components.

A further object of the invention is to provide a vehicle of the type indicated above which ensures - at the same time - comfort for the user and good stability characteristics in all driving conditions.

Yet another object of the invention is to provide a vehicle of the type indicated above which is capable of operating in different operating modes, according to the characteristics and requirements of the user, and according to the driving conditions and, in particular, also with large variations in the gradient of the road and the weight carried.

Yet another object of the invention is to provide a vehicle of the type specified above which guarantees safety for the user even at relatively high speeds, and also in situations where the wheels tend to slip on the ground, in particular, on wet or icy roads and even on particularly bumpy roads.

### Summary of the invention

In view of achieving the aforesaid objects, the invention relates to a vehicle having the characteristics of claim 1 or claim 2.

The two electric motors may be controlled to fulfill their assistance function in compliance with current regulations (EPAC, Speed-EPAC, non-EPAC type approval).

In the preferred example, the two motorized rear wheels are carried by the frame by means of two suspensions configured to allow independent, or substantially independent, vertical movements of the two rear wheels.

According to an additional characteristic, each electric motor has a rotor rigidly connected to the hub of the respective rear wheel, and a stator rigidly connected to a wheel axle carried by the vehicle frame by means of a respective suspension.

In the case wherein the pedal crank assembly is connected to both electric motors by means of respective transmissions, according to another embodiment the electronic controller is configured to activate an operating mode where both electric motors are operating, or an operating mode wherein only the first electric motor is operating, or an operating mode wherein only the second electric motor is operating. In this way the total power delivered is that of the single motor, for example, of a nominal 250W.

In this embodiment, the two transmissions associated with the two rear wheels may be configured to achieve equal transmission ratios, or in such a way as to achieve two different transmission ratios.

In a concrete embodiment example, the axles of the two rear wheels are carried by the rear ends of two longitudinal arms mounted articulated to the frame about a transverse axis, and two independent elastic members are provided, each interposed between a respective longitudinal arm and the frame.

Thanks to the aforesaid characteristics, the vehicle according to the invention implements a series of important advantages.

In the first place, the use of two independent electric motors to assist the user's pedaling makes it possible to obtain high operating efficiency, which translates into high assistance power for the user without compromising the autonomy of the power supply batteries of the motors, while avoiding - at the same time - the large bulk which would result from using a single more powerful motor.

The control of the rotation of the two rear wheels with respective electric motors allows the implementation of control strategies of the motors that guarantee high safety, excellent road holding even on slippery ground and even at relatively high speeds.

In the solution with a single chain transmission, under cruising conditions it is possible to ensure that the two electric motors operate in perfect synchronism, thanks to the fact that the electronic controller of the vehicle controls the operation of just the first electric motor according to the torque applied by the user on the pedal crank assembly, while controlling the second electric motor by simply adapting it to operate at the same speed as the first motor, i.e. by emulating the operation of the first motor.

In the variant that envisages two transmissions for connecting the pedal crank assembly to the two mutually independent electric motors associated with the rear wheels, it is possible to advantageously provide the aforesaid different operating modes, activating only the first electric motor, or only the second electric motor (for the purpose to ensure at all times an overall nominal power within the limits of the regulations, for example, 250 W and maximum speeds of 25 km/h - "no Type approval EPACs"), or both electric motors in the case of configurations wherein higher power delivery and higher speeds are allowed.

In the case of this solution, it is further advantageous to provide two transmissions configured to achieve two different transmission ratios, which gives the vehicle considerable operating flexibility, allowing the user to activate the operating mode, which each time is more suitable according to the operating conditions.

The invention is applicable to various types of vehicles, such as for example "speed-EPAC" type vehicles requiring "L1e-B" type approval, "non-EPAC" type vehicles requiring "L1eA" type approval, pedal-assisted cargo bicycles, "single-lane" or "multi-lane" type vehicles, with an auxiliary electric motor for transporting people or things, or other forms of personal mobility devices (PMDs) or personal light electric vehicles (PLEVs).

The vehicle according to the invention does not require a gearbox, which constitutes a further major simplification.

In the preferred embodiment, each electric motor has its rotor directly connected to the wheel hub, which greatly simplifies the vehicle configuration.

The axles of the two rear wheels are carried by the rear ends of two oscillating longitudinal arms, with which two respective elastic members are associated. This solution is advantageous both for ride comfort and road holding, and for the resulting extreme simplification regarding the general structure of the vehicle.

The frame may be configured, in a manner known per se, to support a luggage container, the outer surfaces of which may be covered with arrays of thin-film photovoltaic panels, as already illustrated in the aforementioned documents by the same Applicant. The electrical energy generated by the photovoltaic cells allows recharging of the electric power supply batteries of the pedal assistance electric motors.

In a variant, the frame comprises:
- a saddle tube, for supporting the saddle,
- a steering tube, for rotatably supporting a steering shaft,
- a crankset tube, for rotatably supporting a pedal crank assembly, and
- two side panels that enclose the saddle tube and the steering tube and which form the only connection between the saddle tube, the steering tube and the crankset tube,
- wherein the two side panels are substantially identical to each other and have front portions that enclose, and connect to each other, the saddle tube and the steering tube, said front portions of one or both side panels having upper and lower longitudinal edges defining folded flanges for mutual rigid connection of the front portions of the two side panels,

wherein the two side panels have rear portions, which are more spaced apart from each other than said front portions, to define a space for accommodating the two rear wheels, the upper longitudinal edges of the rear portions of the two side panels being connected to a third panel, which closes the space between said rear portions at the top,
said saddle tube and said steering tube having a quadrangular cross-section and being preferably made of high-strength steel plate, with a thickness between 0.4 mm and 1.2 mm, of the dual phase type.

### Detailed description of the invention

Further characteristics and advantages of the invention will become apparent from the description that follows with reference to the attached drawings, provided by way of limiting example, wherein:
Figure 1 is a perspective view of an embodiment example of a vehicle according to the invention, with two motorized rear wheels,
Figure 2 is a perspective view of the vehicle of Figure 1, with the luggage container and the outer casing panels removed,
Figure 3 is a perspective view of the frame,
Figure 4 is a perspective view showing the detail of the rear suspension of the vehicle,
Figures 5 - 7 are perspective views illustrating three alternative configurations of the transmission system that connects the pedal crank assembly to the rear wheels of the vehicle,
Figure 8 is a cross-sectioned perspective view on an enlarged scale showing the detail of an electric motor associated with one of the two wheels,
figure 9 is a perspective view of an embodiment in the form of a bicycle with a single rear wheel, but having a frame made according to the present invention and also applicable to a bicycle according to the invention, with two rear wheels,
figure 10 shows the vehicle of figure 9 where the outer panels bearing the photovoltaic cells have been removed,
figures 11, 12 are perspective views of the frame of the vehicle of figures 9, 10,
Figure 13 is an exploded perspective view of the frame of Figures 11, 12, and
Figure 14 is a side view of a semi-finished product constituting one of the two side panels of the frame of Figures 11, 12.

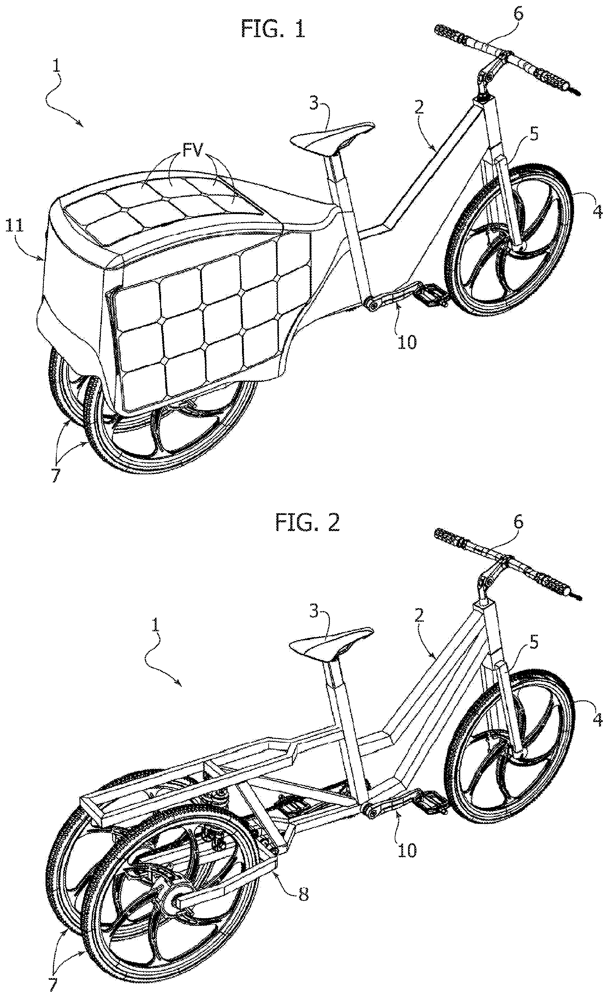

With reference to Figures 1-8, numeral 1 indicates - in its entirety - a pedal-assisted vehicle of the ride-on type, comprising a frame 2 carrying a saddle 3, a front wheel 4 (which could be replaced by an assembly of two front side-by-side wheels) carried by a steering assembly including a fork 5 with a steering shaft supported in a rotatable manner by the frame 2 and connected to a handlebar 6.

The vehicle comprises two rear wheels 7 arranged side-by-side and carried by the frame 2.

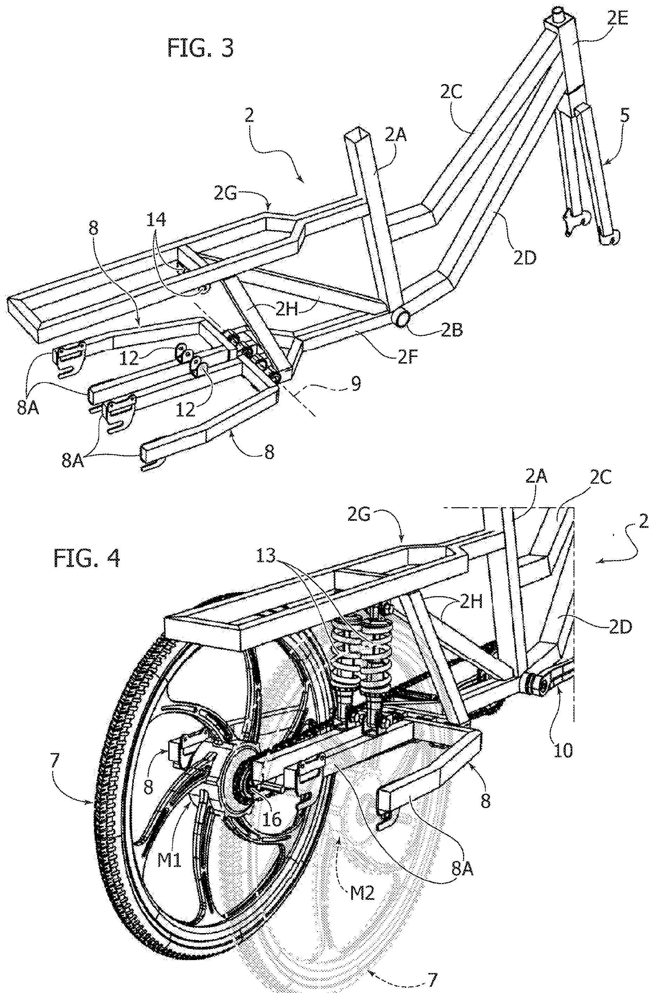

In the illustrated example, the two wheels 7 are carried by the frame 2 independently of each other, by means of two longitudinal arms 8, which are connected in an articulated way to the frame 2 about a transverse axis 9 (see Figure 3). In the specific example illustrated, each of the two arms 8 has a fork configuration, with a central portion connected in an articulated way to the frame 2 around the axis 9, and two branches 8A whose free ends carry the axle of the respective rear wheel.

In the example illustrated, the frame 2 comprises tubular members with a quadrangular cross-section made of high-strength steel of the Dual Phase type, with values between DP400 and DP1500 and thicknesses between 0.5 mm and 1.2 mm. In the example, the frame 2 includes a saddle tube 2A whose upper end receives the saddle support 3, and whose lower end is rigidly connected to the tube 2B, which supports a pedal crank assembly 10 in rotation. The saddle tube 2A is connected by means of an upper diagonal arm 2C and a lower diagonal arm 2D to a steering tube 2E within which a cylindrical tube is mounted, which supports the steering shaft in rotation. Behind the saddle tube 2A, the frame 2 includes a lower support 2F to which the two longitudinal arms 8 are pivotally connected, and an upper support 2G, which is connected to the lower support 2F by struts 2H and which is used to mount a luggage container 11 (see Figure 1) whose outer surfaces are preferably covered with arrays of thin-film photovoltaic PV panels designed to generate electrical energy, which is used to recharge the power supply batteries of the pedal assistance electric motors, for the lighting system power supply and on-board electronics power supply, which will be described below. In a preferred configuration, the diagonal 2C and the strut 2H are eliminated without compromising the robustness performance of the vehicle.

With reference to Figure 4, the inner branches 8A of the two longitudinal arms 8 carry brackets 12 (Figure 3) used to connect the lower ends of two spring-shock absorber assemblies 13, the upper ends of which are connected in an articulated way to brackets 14 (Figure 3) carried by the upper support 2G of the frame 2.

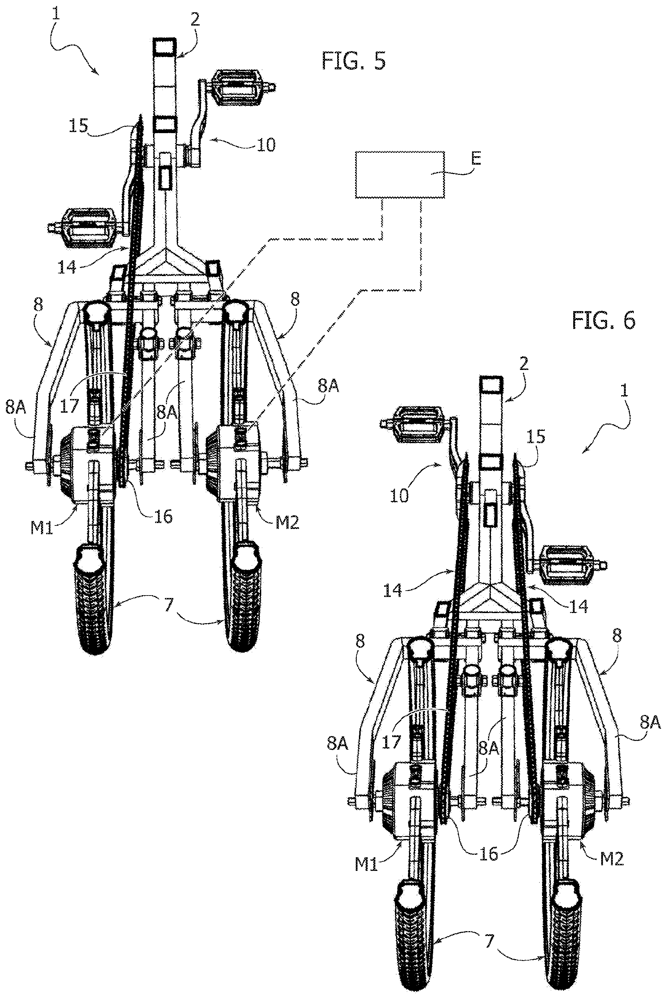

With reference to Figures 5 - 8, two independent electric motors M1, M2 are associated with the two rear wheels 7 on the axes of these wheels, i.e. having their rotors not connected in rotation to each other. The electric motors M1, M2 may be of any known type.

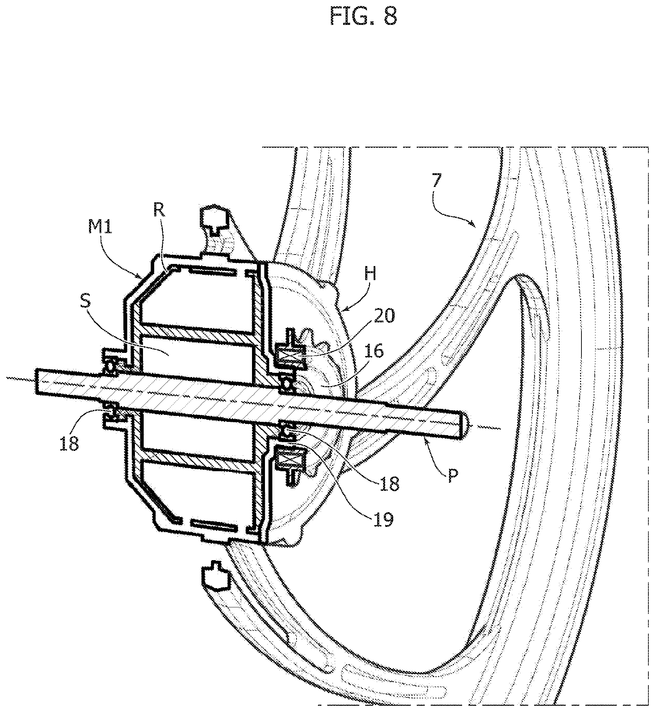

In the preferred example illustrated here, each electric motor has a rotor R (see Figure 8 that illustrates the motor M1, the arrangement of the motor M2 being identical), which constitutes the hub H of the respective wheel 7 and a stator S, which is carried by a fixed wheel axle P, which is mounted on the rear end of the respective longitudinal arm 8 (not shown in Figure 8).

Figure 5 illustrates a first embodiment wherein the pedal crank assembly 10 is connected by means of a chain transmission 14 solely to the rotor of the first electric motor M1. The chain transmission 14 comprises a gear 15 associated with the pedal crank assembly 10, a pinion 16 (see also Figure 8) associated with the rotor of the electric motor M1, and a closed loop chain 17 engaged on the gear 15 and on the pinion 16.

With reference again to Figure 8, the rotor assembly R of the electric motor M1 is supported in rotation around the axle P by rolling bearings 18. The pinion 16 for engaging the chain 17 is mounted on a tubular appendage 19 of the rotor assembly R with the interposition of a freewheel 20. The constructional details of the freewheel 20 have not been shown in Figure 8 since they can be made in any known way. The freewheel 20 is configured to allow the rotation imparted by the pedals to the pinion 16, by means of the chain 17, to be transmitted to the rotor R of the electric motor M1, but at the same time it is possible for the rotor R and the wheel S to continue rotating even when the pinion 16 stops, due to an interruption in pedaling.

On the side opposite the freewheel, the brake disc and the relative locking system, not shown in the figures, are preferably housed. Alternatively, the braking system may be implemented with brake shoes that act directly on the wheel rim.

Returning again to Figure 5, an electronic controller E controls the operation of the first electric motor M1 and of the second electric motor M2.

In a preferred embodiment, the electronic controller E only controls the operation of the electric motor M1 as a function of the torque applied by the user to the pedal crank assembly 10, while the electric motor M2 is controlled by the electronic controller E simply by emulating the operation of the electric motor M1, i.e. making the electric motor M2 operate at all times at the same rotational speed as the first electric motor M1.

The torque applied by the user to the pedal crank assembly 10 is detected directly by the first electric motor M1, since it is transmitted by the pinion 16 to the rotor R of the electric motor M1.

Thanks to the aforesaid characteristics, synchronized operation of the two electric motors M1, M2 is constantly maintained.

Figure 6 shows a variant wherein the pedal crank assembly 10 is connected to both rotors of the electric motors M1, M2 by means of two respective chain transmissions 14 identical to the chain transmission 14 described with reference to Figure 5.

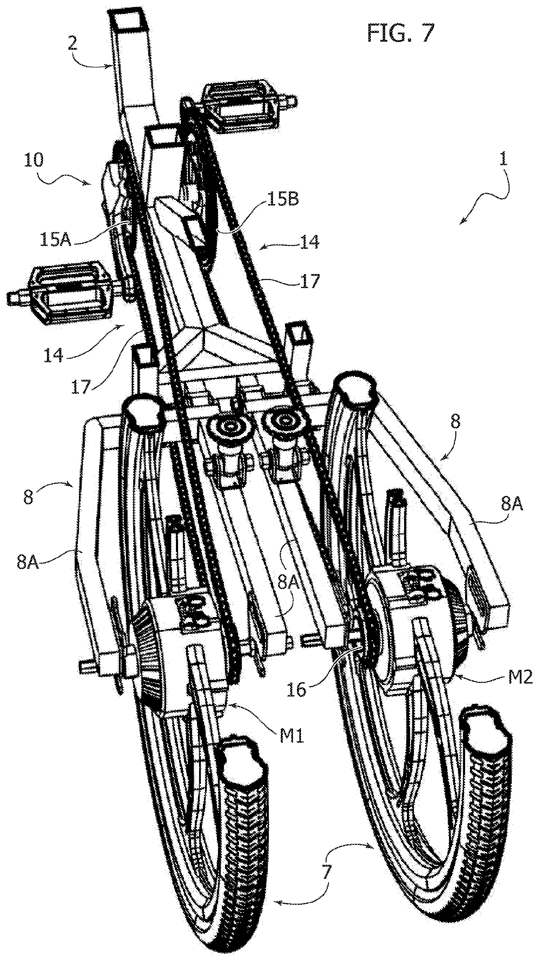

Figure 7 illustrates a further variant, wherein the pedal crank assembly 10 is also connected to the rotors of both electric motors M1, M2, with the difference that - in this case - the two chain transmissions 14 are configured in such a way as to create two different transmission ratios. In the illustrated example, this is achieved in that the pedal crank assembly is associated with two gears 15A, 15B, having different diameters, for engaging the chains 17 of the two chain transmissions 14.

In the case of the embodiments of Figures 6, 7, it can be envisaged that the electronic controller E activates the operation of both electric motors M1, M2, which in this case are controlled in the way described above, or an operating mode wherein only the electric motor M1 operates, or an operating mode wherein only the electric motor M2 operates. In the case of the embodiment in Figure 7, a considerable operating flexibility of the vehicle is thus obtained, which allows the user to choose each time the most suitable operating mode according to his needs and the driving conditions, in compliance with the regulations associated with EPACs, Speed EPACs, single-lane cargo bikes, multi-lane cargo bikes or even PMDs or PLEVs.

As is clear from the foregoing description, the vehicle according to the invention allows considerable advantages to be achieved both in terms of operational efficiency, in terms of safety for the user, and in terms of flexibility of use. Last but not least, the vehicle according to the invention is characterized by extreme simplicity and economy of manufacture, which also makes it suitable for mass production.

In one variant, the ride-on vehicle is equipped with a central motor integrated in the pedal crank assembly while the two rear wheels with relative independent suspensions are equipped with a braking assembly and freewheel.

In a further variant, the ride-on vehicle is equipped with a central motor integrated in the pedal crank assembly, and one of the two rear wheels is equipped with a multi-ratio gearbox.

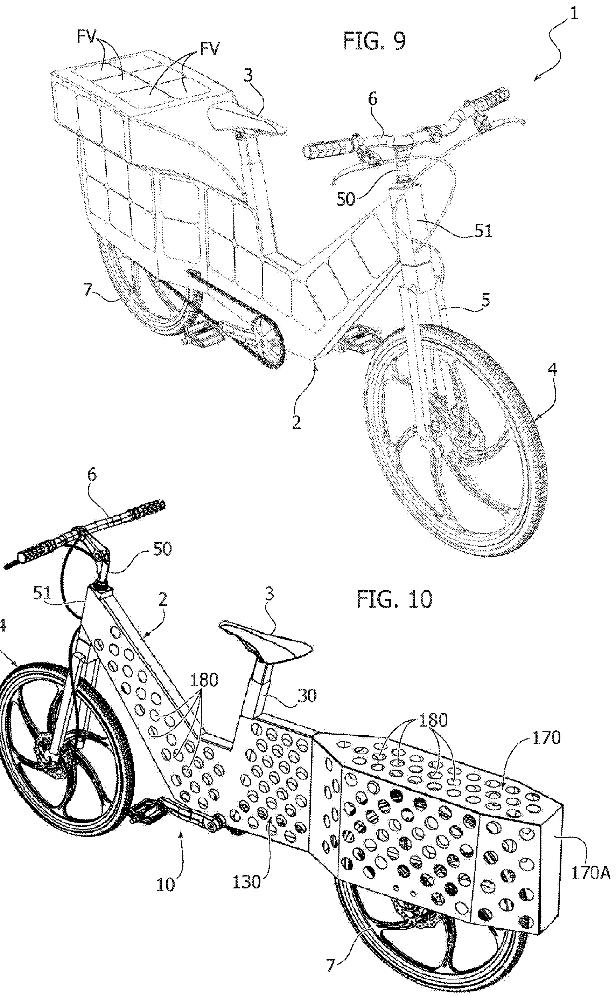

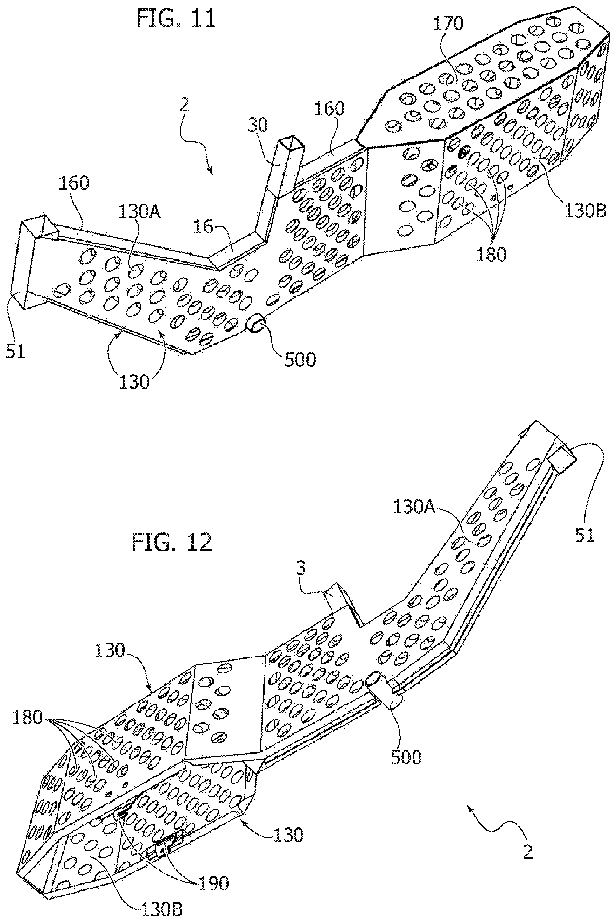

Figure 9 of the attached drawings is a perspective view of a further example of a bicycle with a single rear wheel, which is described here as having a frame made according to a principle which can also be applied to a vehicle with two rear wheels. Figure 10 shows the vehicle of Figure 9 with the outer panels carrying the photovoltaic cells having been removed, in order to show the frame. Figures 11, 12 are perspective views of the frame of the vehicle of Figures 9, 10. As indicated, this frame is made according to a principle that can also be applied to a vehicle with two rear wheels, envisaging a consequently increased distance between the two side panels constituting the rear part of the frame, so as to leave sufficient space between these panels to accommodate the two rear wheels.

In Figures 9, 10 the parts common to those of Figures 1 and 2 are indicated by the same reference numbers. In this example, the bicycle 1 has a frame 2 including a saddle tube 30, within which the support tube of the saddle 3 is fixed, a steering tube 51, which supports in rotation a steering shaft 50 and a tube 500 for supporting the pedal crank assembly 10 in rotation.

In the illustrated example, the saddle tube 30 and the steering tube 51 are tubular elements with a quadrangular cross-section, made of high-strength steel plate, with a thickness between 0.4 mm and 1.2 mm, and steel of the dual phase DP type, with values preferably higher than 600 up to 1500.

The saddle tube 30 is intended to receive the support tube of the saddle 3, while the steering tube 51 is intended to receive a circular tube which supports the steering shaft 50 in rotation, which connects the handlebar 6 to the fork 5 carrying the front wheel 4 of the bicycle. The rear wheel 7 is carried by the frame 2, in the manner described in detail below. As already indicated, although Figures 9-14 illustrate an example of a bicycle with a single rear wheel 7, the structure of the frame 2 illustrated therein could also be used, with the necessary dimensional modifications, for a bicycle with two rear wheels 7, like the one in Figure 1.

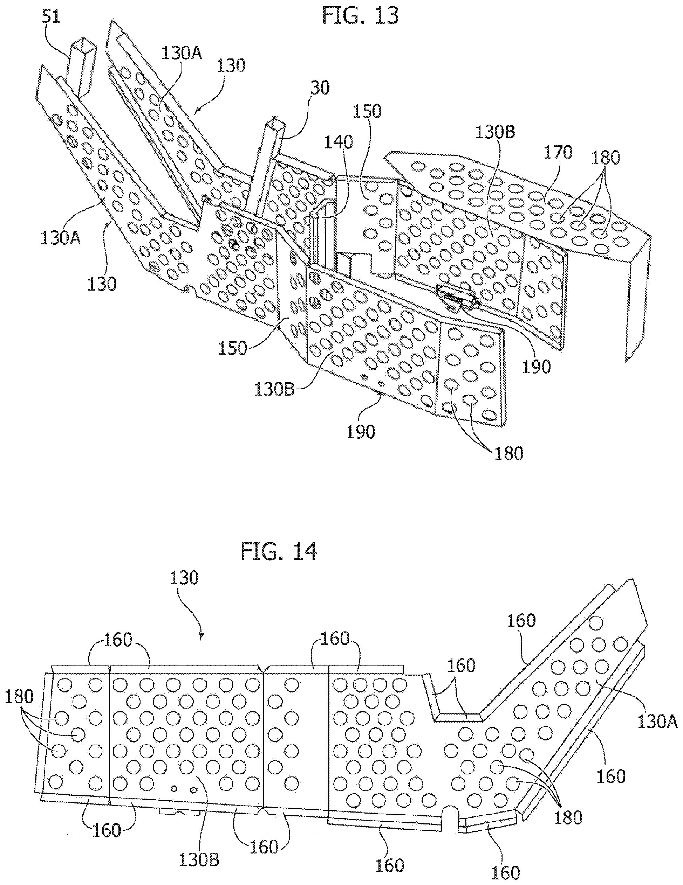

The frame 2 of the vehicle of Figures 9-14 comprises two sheet metal side panels 130 (see in particular Figure 13), which enclose the steering tube 51 and the saddle tube 30 between them, and which constitute the only connection between the steering tube 51, the saddle tube 30 and the crankset tube 500. With reference again to Figure 13, a vertical beam 140 is also interposed between the two lateral sheet metal panels 130, which acts as a spacer element between two portions 150 of the panels 130, which diverge from each other in the direction of the rear part of the frame, and which act as intermediate connecting elements between front portions 130A and rear portions 130B of the two panels 130. As already indicated, in the case of a vehicle with two rear wheels, such as that of Figure 1, the rear portions of the panels 130 are configured and arranged so as to leave sufficient space between them to accommodate the two rear wheels 7.

The two front portions 130A of the panels 130 are arranged between the saddle tube 30 and the steering tube 51, on the two sides of these tubes and have upper and lower longitudinal edges rigidly connected to each other, to define a beam with a closed quadrangular section, which connects the saddle tube 30 to the steering tube 51.

In the illustrated example, both the upper longitudinal edge and the lower longitudinal edge of the front portions 130A of each of the two side panels 130 have folded flanges 160 (Figure 14 shows the semi-finished product of a sheet metal panel before folding the flanges 160), which are mutually connected by any technique chosen from electric spot welding, laser welding, arc welding, or gluing. One or more flanges 160 may be removable, to allow the insertion and extraction of a battery pack.

The rear portions 130B of the two panels 130 extend behind the saddle tube 30 and are more spaced apart from each other than the front portions 130A, to define a space for accommodating the rear wheel 7, or the two rear wheels 7 in the case of a vehicle with two rear wheels. The upper longitudinal edges of the rear portions 130B of the sheet metal side panels 130 are connected to the lateral edges of a third sheet metal panel 170 arranged horizontally above the rear wheel 7, or rear wheels 7. In the illustrated example, the panel 170 extends with an appendage 170A arranged vertically behind the rear wheel 7, and rigidly connected, by means of any of the techniques described above, to the rear end edges of the two sheet metal side panels 130.

Preferably, each of the metal sheet panels 130, 170 has a distribution of aesthetic and/or lightening openings 180.

In the preferred embodiment, the two side metal sheet panels 130 are substantially identical to each other and are each obtained by means of a single shearing operation, which allows obtainment of the required profile of the panel, after which a folding operation of the flanges 160 is carried out. As is evident, this structure and arrangement lends itself advantageously to mass production, also by means of automated equipment, with drastically reduced production costs.

At the same time, the two sheet metal side panels, and the third panel 170, if provided, define an extremely rigid, resistant and reliable structure.

As illustrated in Figure 1, the frame may be covered with panels bearing a distribution of photovoltaic PV cells, which produce electric energy for recharging the electric power supply batteries of the electric assistance motor.

Preferably, the sheet metal panels are made of high strength steel. The saddle tube 30 and the steering tube 51 preferably have a quadrangular cross-section, and are preferably made of high strength steel. Also these tubular components with a quadrangular cross-section may be obtained by shearing, folding and welding of sheet metal.

In the manufacture of the frame described above, the saddle tube 30, the steering tube 51 and the crankset tube 500 are prepared, and the two side panels of metal sheet 130, substantially identical, are formed by shearing or laser cutting of sheet metal. The two metal sheet panels 130 are then rigidly connected, for example, by welding or gluing, to the saddle tube 30, to the steering tube 51 and to the crankset tube 500, arranging the two side metal sheet panels 130 substantially parallel and spaced apart from each other, in such a way that the saddle tube 30 and the steering tube 51 are included in predetermined positions between the two sheet metal side panels 130, and in such a way that the two sheet metal side panels 130 constitute the only connection between the saddle tube 30, the steering tube 51 and the crankset tube 500. The front portions 130A of the two panels 130 are rigidly connected to each other, by means of the connecting flanges 160 formed by folding at least one of the two panels 130. The rear portions 130B of the two side metal sheet panels are rigidly connected to the third panel 170, which closes the space between said rear portions at the top. In the illustrated example, the supports 190 intended to support the rear wheel axle are mounted on the inner surfaces of the rear portions 130B.

In the case of the vehicle according to the invention, with two rear wheels associated with two independent suspensions, the auxiliary element 140 of the frame 2 (Figure 13) carries a support for the articulation of two longitudinal arms 8 carrying the rear wheels 7, as in the solution of Figure 2.

At the end of the assembly process, the frame is preferably protected by means of an immersion process in a cataphoresis bath and finally painted in the required color.

In a preferred embodiment, the surfaces of the frame are covered by thin photovoltaic panels with high efficiency monocrystalline or multi-junction silicon cells, for example, based on GaAs thin film, or of the InGaP/GaAs/Si tandem type. The rear support member of each cell is glued with structural adhesives in order to contribute to the structural and vibrational strength of the resulting frame.

In a variant, both the side panels 130 and the panel 170 can be made up of sheets of plasto-metallic composite material, or of carbon fiber or again of a composition of high-strength sheet metal panels with composite or polymeric material panels. In this case, the side and closing panels can be obtained by injection molding or by thermoforming.

All the aforesaid operations may be carried out either in manual mode or preferably in an automated way, allowing - in any case - drastic lowering of the production costs, particularly in the case of large series productions.

Of course, without prejudice to the principle of the invention, the embodiments and construction details may widely vary with respect to those described and illustrated purely by way of example, without thereby departing from the scope of the invention, as defined in the attached claims.

## Claims

1. A vehicle of the ride-on type, comprising:
- a frame (2), carrying a saddle (3),
- a front wheel assembly (4), carried by a steering assembly (5) associated with the frame (2) and comprising a single front wheel (4) or two front wheels arranged side-by-side,
- two rear wheels (7) arranged side-by-side and carried by the frame (2), and
- a pedal crank assembly (10) rotatably mounted on the frame (2) and connected by means of a transmission (14) to at least one of the two rear wheels (7),
- two electric motors (M1, M2) controlled to provide pedal assistance, respectively associated with the two rear wheels (7) of the vehicle, each on the axle of the respective rear wheel (7) and having respective rotors (R) that are not connected to each other.
said vehicle being **characterized in that** the pedal crank assembly (10) is connected by means of said transmission (14) solely to the rotor (R) of a first electric motor (M1) of said electric motors (M1, M2), said transmission (14) being a chain transmission, comprising a gear (15) mounted in rotation with the pedal crank assembly (10), a pinion (16) connected in rotation with the rotor (R) of said first electric motor (M1), via a freewheel (20), and a closed-loop chain (17) engaged on the gear (15) and on the pinion (16), said vehicle further comprising an electronic controller (E) configured to control said first electric motor (M1) according to the torque applied by the user to the pedal crank assembly (10) and to control the second electric motor (M2) adapting it to operate at the same rotation speed as the first motor (M1).

2. A vehicle of the ride-on type, comprising:
- a frame (2), carrying a saddle (3),
- a front wheel assembly (4), carried by a steering assembly (5) associated with the frame (2) and comprising a single front wheel (4) or two front wheels arranged side-by-side,
- two rear wheels (7) arranged side-by-side and carried by the frame (2), and
- a pedal crank assembly (10) rotatably mounted on the frame (2) and connected by means of a transmission (14) to at least one of the two rear wheels (7),
- two electric motors (M1, M2) controlled to provide pedal assistance, respectively associated with the two rear wheels (7) of the vehicle, each on the axle of the respective rear wheel (7) and having respective rotors (R) that are not connected to each other.
said vehicle being **characterized in that** the pedal crank assembly (10) is connected by means of said transmission (14) to the rotor (R) of a first electric motor (M1) of said electric motors (M1, M2), and by means of a further transmission (14) to the rotor (R) of the second electric motor (M2), each transmission (14) being a chain transmission, comprising a respective gear (15) mounted in rotation with the pedal crank assembly (10), a respective pinion (16) connected in rotation with the rotor (R) of the respective electric motor, by means of a freewheel (20), and a closed-loop chain (17) engaged on the gear (15) and on the pinion (16).

3. A vehicle according to claim 1 or claim 2, **characterized in that** the two rear wheels (7) are carried by the frame (2) by means of two suspensions (8, 13) configured to enable independent, or substantially independent, vertical movements of the two rear wheels (7).

4. A vehicle according to claim 1 or claim 2, **characterized in that** each motor has a rotor (R) rigidly connected to the hub (H) of the respective rear wheel (7) and a stator (S) rigidly connected to a wheel axle (P) carried by the frame (2) of the vehicle by means of a respective suspension (8, 13).

5. A vehicle according to claim 2, **characterized in that** the electronic controller (E) is configured to activate an operating mode with both electric motors (M1, M2) operating, or an operating mode wherein only the first electric motor (M1) is operating, or an operating mode wherein only the second electric motor (M2) is operating.

6. A vehicle according to claim 5, **characterized in that** that the two chain transmissions are respectively engaged on two gears of different diameters (14) associated with the pedal crank assembly, to achieve two different transmission ratios.

7. A vehicle according to claim 3, **characterized in that** the axles (P) of the rear wheels (7) are carried at the rear ends of two longitudinal arms (8) mounted articulated to the frame (2) around a transversal axis (9).

8. A vehicle according to claim 7, **characterized in that** it comprises two independent elastic members (13), each interposed between a respective longitudinal arm (8) and the frame (2).

9. A vehicle according to claim 1 or claim 2, **characterized in that** said frame (2) comprises:
- a saddle tube (30), for supporting the saddle (3),
- a steering tube (51), for rotatably supporting a steering shaft (50),
- a crankset tube (500), rotatably supporting the pedal crank assembly (10), and
- two side panels (130) that enclose the saddle tube (30) and the steering tube (51), and which form the only connection between the saddle tube (30), the steering tube (51) and the crankset tube (500),
- wherein the two side panels (130) are substantially identical to each other and have front portions (130A) which enclose, and connect to each other, the saddle tube (30) and the steering tube (51), said front portions (130A) of one or both side panels (130) having upper and lower longitudinal edges defining folded flanges (160) for mutual rigid connection of the front portions (130A) of the two side panels (130),
wherein the two side panels (130) have rear portions (130B), which are more spaced apart from each other than said front portions (130A), to define a space for accommodating the two rear wheels (7), the upper longitudinal edges of the rear portions (130B) of the two side panels (130) being connected to a third panel (170), which closes the space between said rear portions (130B) at the top,
said saddle tube (30) and said steering tube (51) having a quadrangular section and being preferably made of high-strength steel plate, with a thickness between 0.4 mm and 1.2 mm, of the dual phase type.

10. A vehicle according to claim 9, **characterized in that** the side panels (130) are rigidly connected to each other by a technique chosen from electric spot welding, laser welding, arc welding, or gluing.

11. A vehicle according to claim 9, **characterized in that** each of said side panels (130) is made of sheet metal and is obtained by a single shearing or laser cutting operation, so as to present a distribution of openings (180) and foldable connection flanges (160).

## Patentansprüche

1. Fahrzeug vom Aufsitztyp, umfassend:
- einen Rahmen (2), der einen Sattel (3) trägt,
- eine Vorderradbaugruppe (4), die durch eine Lenkbaugruppe (5) getragen ist, die dem Rahmen (2) zugeordnet ist, und ein einzelnes Vorderrad (4) oder zwei nebeneinander angeordnete Vorderräder umfasst,
- zwei nebeneinander angeordnete Hinterräder (7), die durch den Rahmen (2) getragen sind, und
- eine Pedalkurbelbaugruppe (10), die an dem Rahmen (2) drehbar montiert ist und mittels eines Getriebes (14) mit mindestens einem der zwei Hinterräder (7) verbunden ist,
- zwei Elektromotoren (M1, M2), die dazu gesteuert sind, Pedalunterstützung bereitzustellen, die jeweils den zwei Hinterrädern (7) des Fahrzeugs zugeordnet sind, die sich jeder auf der Achse des jeweiligen Hinterrads (7) befinden und jeweilige Rotoren (R) aufweisen, die nicht miteinander verbunden sind.
wobei das Fahrzeug **dadurch gekennzeichnet ist, dass** die Pedalkurbelbaugruppe (10) mittels des Getriebes (14) ausschließlich mit dem Rotor (R) eines ersten Elektromotors (M1) der Elektromotoren (M1, M2) verbunden ist, wobei das Getriebe (14) ein Kettengetriebe ist, das ein Zahnrad (15), das mit der Pedalkurbelbaugruppe (10) in Drehung montiert ist, ein Ritzel (16), das über einen Freilauf (20) mit dem Rotor (R) des ersten Elektromotors (M1) in Drehung verbunden ist, und eine als Schleife geschlossene Kette (17), die mit dem Zahnrad (15) und dem Ritzel (16) in Eingriff steht, umfasst, wobei das Fahrzeug weiter eine elektronische Steuereinheit (E) umfasst, die dazu konfiguriert ist, den ersten Elektromotor (M1) entsprechend dem Drehmoment, das durch den Benutzer auf die Pedalkurbelbaugruppe (10) ausgeübt wird, zu steuern und den zweiten Elektromotor (M2) zu steuern, sodass er dazu angepasst ist, mit derselben Drehzahl wie der erste Motor (M1) in Betrieb zu sein.

2. Fahrzeug vom Aufsitztyp, umfassend:
- einen Rahmen (2), der einen Sattel (3) trägt,
- eine Vorderradbaugruppe (4), die durch eine Lenkbaugruppe (5) getragen ist, die dem Rahmen (2) zugeordnet ist, und ein einzelnes Vorderrad (4) oder zwei nebeneinander angeordnete Vorderräder umfasst,
- zwei nebeneinander angeordnete Hinterräder (7), die durch den Rahmen (2) getragen sind, und
- eine Pedalkurbelbaugruppe (10), die an dem Rahmen (2) drehbar montiert ist und mittels eines Getriebes (14) mit mindestens einem der zwei Hinterräder (7) verbunden ist,
- zwei Elektromotoren (M1, M2), die dazu gesteuert sind, Pedalunterstützung bereitzustellen, die jeweils den zwei Hinterrädern (7) des Fahrzeugs zugeordnet sind, die sich jeder auf der Achse des jeweiligen Hinterrads (7) befinden und jeweilige Rotoren (R) aufweisen, die nicht miteinander verbunden sind.
wobei das Fahrzeug **dadurch gekennzeichnet ist, dass** die Pedalkurbelbaugruppe (10) mittels des Getriebes (14) mit dem Rotor (R) eines ersten Elektromotors (M1) der Elektromotoren (M1, M2) und mittels eines weiteren Getriebes (14) mit dem Rotor (R) des zweiten Elektromotors (M2) verbunden ist, wobei jedes Getriebe (14) ein Kettengetriebe ist, das ein jeweiliges Zahnrad (15), das mit der Pedalkurbelbaugruppe (10) in Drehung montiert ist, ein jeweiliges Ritzel (16), das mittels eines Freilaufs (20) mit dem Rotor (R) des jeweiligen Elektromotors in Drehung verbunden ist, und eine als Schleife geschlossene Kette (17), die mit dem Zahnrad (15) und dem Ritzel (16) in Eingriff steht, umfasst.

3. Fahrzeug nach Anspruch 1 oder Anspruch 2, **dadurch gekennzeichnet, dass** die zwei Hinterräder (7) durch den Rahmen (2) mittels zweier Aufhängungen (8, 13) getragen sind, die dazu konfiguriert sind, unabhängige oder im Wesentlichen unabhängige vertikale Bewegungen der zwei Hinterräder (7) zu ermöglichen.

4. Fahrzeug nach Anspruch 1 oder Anspruch 2, **dadurch gekennzeichnet, dass** jeder Motor einen Rotor (R), der mit der Nabe (H) des jeweiligen Hinterrads (7) starr verbunden ist, und einen Stator (S), der mit einer Radachse (P) starr verbunden ist, die durch den Rahmen (2) des Fahrzeugs mittels einer jeweiligen Aufhängung (8, 13) getragen ist, aufweist.

5. Fahrzeug nach Anspruch 2, **dadurch gekennzeichnet, dass** die elektronische Steuereinheit (E) dazu konfiguriert ist, einen Betriebsmodus mit beiden Elektromotoren (M1, M2) in Betrieb, oder einen Betriebsmodus, in dem nur der erste Elektromotor (M1) in Betrieb ist, oder einen Betriebsmodus, in dem nur der zweite Elektromotor (M2) in Betrieb ist, anzuschalten.

6. Fahrzeug nach Anspruch 5, **dadurch gekennzeichnet, dass** die zwei Kettengetriebe jeweils mit zwei Zahnrädern, die unterschiedliche Durchmesser (14) aufweisen, in Eingriff stehen, die der Pedalkurbelbaugruppe zugeordnet sind, um zwei unterschiedliche Übersetzungsverhältnisse zu erzielen.

7. Fahrzeug nach Anspruch 3, **dadurch gekennzeichnet, dass** die Achsen (P) der Hinterräder (7) an den hinteren Enden von zwei Längsarmen (8) getragen sind, die um eine Querachse (9) herum an dem Rahmen (2) gelenkig montiert sind.

8. Fahrzeug nach Anspruch 7, **dadurch gekennzeichnet, dass** es zwei unabhängige elastische Elemente (13) umfasst, die jeweils zwischen einem jeweiligen Längsarm (8) und dem Rahmen (2) angeordnet sind.

9. Fahrzeug nach Anspruch 1 oder Anspruch 2, **dadurch gekennzeichnet, dass** der Rahmen (2) umfasst:
- ein Sattelrohr (30) zum Stützen des Sattels (3),
- ein Lenkrohr (51) zum drehbaren Stützen einer Lenkwelle (50),
- ein Kurbelgarniturohr (500), das die Pedalkurbelbaugruppe (10) drehbar stützt, und
- zwei Seitenpaneele (130), die das Sattelrohr (30) und das Lenkrohr (51) umschließen und die die einzige Verbindung zwischen dem Sattelrohr (30), dem Lenkrohr (51) und dem Kurbelgarniturohr (500) bilden,
- wobei die zwei Seitenpaneele (130) im Wesentlichen identisch zueinander sind und vordere Abschnitte (130A) aufweisen, die das Sattelrohr (30) und das Lenkrohr (51) umschließen und miteinander verbinden, wobei die vorderen Abschnitte (130A) eines oder beider Seitenpaneele (130) obere und untere Längskanten aufweisen, die gefaltete Flansche (160) zur gegenseitigen starren Verbindung der vorderen Abschnitte (130A) der zwei Seitenpaneele (130) definieren,
wobei die zwei Seitenpaneele (130) hintere Abschnitte (130B) aufweisen, die weiter voneinander beabstandet sind als die vorderen Abschnitte (130A), um einen Raum zum Unterbringen der zwei Hinterräder (7) zu definieren, wobei die oberen Längskanten der hinteren Abschnitte (130B) der zwei Seitenpaneele (130) mit einem dritten Paneel (170) verbunden sind, das den Raum zwischen den hinteren Abschnitten (130B) an der Oberseite verschließt,
wobei das Sattelrohr (30) und das Lenkrohr (51) einen viereckigen Querschnitt aufweisen und vorzugsweise aus einer hochfesten Stahlplatte vom Dualphasentyp mit einer Dicke zwischen 0,4 mm und 1,2 mm bestehen.

10. Fahrzeug nach Anspruch 9, **dadurch gekennzeichnet, dass** die Seitenpaneele (130) durch eine Technik, die aus Elektropunktschweißen, Laserschweißen, Lichtbogenschweißen oder Kleben ausgewählt ist, miteinander starr verbunden sind.

11. Fahrzeug nach Anspruch 9, **dadurch gekennzeichnet, dass** jedes der Seitenpaneele (130) aus Metallblech besteht und durch einen einzigen Scher- oder Laserschneidvorgang erhalten wird, sodass sie eine Verteilung von Öffnungen (180) und faltbaren Verbindungsflanschen (160) aufweisen.

## Revendications

1. Véhicule du type à enfourcher, comprenant :
- un cadre (2), portant une selle (3),
- un ensemble roue avant (4), porté par un ensemble de direction (5) associé au cadre (2) et comprenant une roue avant (4) unique ou deux roues avant agencées côte à côte,
- deux roues arrière (7) agencées côte à côte et portées par le cadre (2), et
- un ensemble manivelle (10) de pédale monté en rotation sur le cadre (2) et raccordé au moyen d'une transmission (14) à au moins l'une des deux roues arrière (7),
- deux moteurs électriques (M1, M2) commandés pour fournir une assistance au pédalage, respectivement associés aux deux roues arrière (7) du véhicule, chacun sur l'axe de la roue arrière (7) respective et présentant des rotors (R) respectifs qui ne sont pas raccordés entre eux.
ledit véhicule étant **caractérisé en ce que** l'ensemble manivelle (10) de pédale est raccordé au moyen de ladite transmission (14) uniquement au rotor (R) d'un premier moteur électrique (M1) parmi lesdits moteurs électriques (M1, M2), ladite transmission (14) étant une transmission par chaîne, comprenant un engrenage (15) monté en rotation avec l'ensemble manivelle (10) de pédale, un pignon (16) raccordé en rotation au rotor (R) dudit premier moteur électrique (M1), via une roue libre (20), et une chaîne (17) en boucle fermée en prise sur l'engrenage (15) et sur le pignon (16), ledit véhicule comprenant en outre un dispositif de commande électronique (E) configuré pour commander ledit premier moteur électrique (M1) en fonction du couple appliqué par l'utilisateur à l'ensemble manivelle (10) de pédale et pour commander le deuxième moteur électrique (M2) en l'adaptant afin qu'il fonctionne à la même vitesse de rotation que le premier moteur (M1).

2. Véhicule du type à enfourcher, comprenant :
- un cadre (2), portant une selle (3),
- un ensemble roue avant (4), porté par un ensemble de direction (5) associé au cadre (2) et comprenant une roue avant (4) unique ou deux roues avant agencées côte à côte,
- deux roues arrière (7) agencées côte à côte et portées par le cadre (2), et
- un ensemble manivelle (10) de pédale monté en rotation sur le cadre (2) et raccordé au moyen d'une transmission (14) à au moins l'une des deux roues arrière (7),
- deux moteurs électriques (M1, M2) commandés pour fournir une assistance au pédalage, respectivement associés aux deux roues arrière (7) du véhicule, chacun sur l'axe de la roue arrière (7) respective et présentant des rotors (R) respectifs qui ne sont pas raccordés entre eux.
ledit véhicule étant **caractérisé en ce que** l'ensemble manivelle (10) de pédale est raccordé au moyen de ladite transmission (14) au rotor (R) d'un premier moteur électrique (M1) parmi lesdits moteurs électriques (M1, M2), et au moyen d'une autre transmission (14) au rotor (R) du deuxième moteur électrique (M2), chaque transmission (14) étant une transmission par chaîne, comprenant un engrenage (15) respectif monté en rotation avec l'ensemble manivelle (10) de pédale, un pignon (16) respectif raccordé en rotation au rotor (R) du moteur électrique respectif, au moyen d'une roue libre (20), et une chaîne (17) en boucle fermée en prise sur l'engrenage (15) et sur le pignon (16).

3. Véhicule selon la revendication 1 ou la revendication 2, **caractérisé en ce que** les deux roues arrière (7) sont portées par le cadre (2) au moyen de deux suspensions (8, 13) configurées pour permettre des mouvements verticaux indépendants, ou sensiblement indépendants, des deux roues arrière (7).

4. Véhicule selon la revendication 1 ou la revendication 2, **caractérisé en ce que** chaque moteur présente un rotor (R) raccordé de manière rigide au moyeu (H) de la roue arrière (7) respective et un stator (S) raccordé de manière rigide à un axe de roue (P) porté par le cadre (2) du véhicule au moyen d'une suspension (8, 13) respective.

5. Véhicule selon la revendication 2, **caractérisé en ce que** le dispositif de commande électronique (E) est configuré pour activer un mode de fonctionnement avec les deux moteurs électriques (M1, M2) en fonctionnement, un mode de fonctionnement dans lequel seul le premier moteur électrique (M1) fonctionne ou un mode de fonctionnement dans lequel seul le deuxième moteur électrique (M2) fonctionne.

6. Véhicule selon la revendication 5, **caractérisé en ce que** les deux transmissions par chaîne sont respectivement en prise sur deux engrenages de diamètres (14) différents associés à l'ensemble manivelle de pédale, pour atteindre deux rapports de transmission différents.

7. Véhicule selon la revendication 3, **caractérisé en ce que** les axes (P) des roues arrière (7) sont portés aux extrémités arrière de deux bras longitudinaux (8) montés de manière articulée sur le cadre (2) autour d'un axe transversal (9).

8. Véhicule selon la revendication 7, **caractérisé en ce qu'**il comprend deux organes élastiques indépendants (13), chacun interposé entre un bras longitudinal (8) respectif et le cadre (2).

9. Véhicule selon la revendication 1 ou la revendication 2, **caractérisé en ce que** ledit cadre (2) comprend :
- un tube (30) de selle, pour supporter la selle (3),
- un tube (51) de direction, pour supporter en rotation un arbre (50) de direction,
- un tube (500) de pédalier, supportant en rotation l'ensemble manivelle (10) de pédale, et
- deux panneaux latéraux (130) qui entourent le tube (30) de selle et le tube (51) de direction, et qui forment le seul raccordement entre le tube (30) de selle, le tube (51) de direction et le tube (500) de pédalier,
- dans lequel les deux panneaux latéraux (130) sont sensiblement identiques l'un à l'autre et présentent des parties avant (130A) qui entourent, et raccordent entre eux, le tube (30) de selle et le tube (51) de direction, lesdites parties avant (130A) d'un ou des deux panneaux latéraux (130) présentant des bords longitudinaux supérieurs et inférieurs définissant des brides pliées (160) pour un raccordement rigide mutuel des parties avant (130A) des deux panneaux latéraux (130),
dans lequel les deux panneaux latéraux (130) présentent des parties arrière (130B), qui sont plus espacées les unes des autres que lesdites parties avant (130A), pour définir un espace destiné à loger les deux roues arrière (7), les bords longitudinaux supérieurs des parties arrière (130B) des deux panneaux latéraux (130) étant raccordés à un troisième panneau (170), qui ferme l'espace entre lesdites parties arrière (130B) en haut,
ledit tube (30) de selle et ledit tube (51) de direction présentant une section quadrangulaire et étant de préférence constitués d'une plaque d'acier à haute résistance, d'une épaisseur comprise entre 0,4 mm et 1,2 mm, de type biphasique.

10. Véhicule selon la revendication 9, **caractérisé en ce que** les panneaux latéraux (130) sont raccordés entre eux de manière rigide par une technique choisie parmi le soudage électrique par points, le soudage au laser, le soudage à l'arc ou le collage.

11. Véhicule selon la revendication 9, **caractérisé en ce que** chacun desdits panneaux latéraux (130) est en tôle et est obtenu par une seule opération de cisaillement ou de découpe au laser, de façon à présenter une répartition d'ouvertures (180) et de brides de raccordement pliables (160).
